# EUROPEAN PATENT APPLICATION

(11) **EP 2 026 621 A2**
(43) Date of publication of application: **18.02.2009**
(21) Application number: 08008588.9
(22) Date of filing: 07.05.2008
(51) Int. Cl.: H04W 48/16

(54) **Method and apparatus for providing neighborhood AP information in a wireless LAN system**

(30) Priority: 26.07.2007 KR 20070075118
(71) Applicant: LG - Nortel Co., Ltd., 679, Yeoksam-dong Gangnam-gu Seoul (KR)
(72) Inventor: Lee, Young Sin, Gangseo-gu Seoul 157-010 (KR)
(74) Representative: Katérle, Axel

(57) **Abstract**

A method of managing communications in a wireless Local Area Network (WLAN) system providing a plurality of channels and comprising an information server for storing the neighborhood access point (AP) information. The method comprises scanning a plurality of channels to detect at least one channel used by a first AP, generating neighborhood AP information including channel information for identifying at least one of the detected channels, and transmitting the neighborhood AP information to an information server, wherein said scanning is performed by a second AP and wherein the first AP is a neighboring AP of the second AP.

## Description

### BACKGROUND

### 1. Field

One or more embodiments disclosed herein relate to a communication system.

### 2. Background

A wireless local area network (WLAN) system uses a plurality of access points to communicate calls for one or more mobile stations. When a station moves from one coverage area to another, a handoff operation must be performed in order to retain a call. This operation is performed based on various scanning procedures that introduce delays and waste valuable radio resources.

### BRIEF DESCRIPTION OF THE DRAWINGS

Figure 1 shows one embodiment of a WLAN system.

Figure 2 shows one embodiment of an AP that may be used in the system of Figure 1.

Figure 3 shows one embodiment of an information server that may be used in the system of Figure 1.

Figure 4 shows one embodiment of a STA in accordance that may be used in the system of Figure 1.

Figure 5 is a flow chart showing steps included in one embodiment of a level 2 handoff method for a STA.

Figure 6 is a flow chart showing steps included in one embodiment of a level 3 movement detection method for a STA.

### DETAILED DESCRIPTION

A communication system may be designed to have a hierarchical structure, for example, to secure openness and scalability. The Open Systems Interconnect (OSI) 7 layer model is often used as a universal standard in explaining the hierarchical structure of a communication system. Such a structure is based on the use of communication function modules needed for interconnection through a communication network, where similar functions are classified into same layers and where each layer is configured to support functions independent from other layers. This configuration minimizes the effect a change in one module will have on the entire system, and helps to secure openness and scalability of the system.

One type of wireless communication system known as WLAN employs an OSI-type hierarchical structure. The first layer (physical layer) and second layer (data link layer) of an OSI 7 layer model employs Institute of Electrical and Electronics Engineers (IEEE) 802.11 series protocols. Further, a WLAN system providing a Voice over IP (VoIP) service may employ a Session Initiation Protocol (SIP) for a fifth layer (session layer) of the OSI 7 layer model.

Among the various aforementioned protocols, the IEEE 802.11 protocol (the second layer protocol) defines the level 2 handoff procedures (handoff actions by the second layer protocol) of a WLAN system. A more detailed explanation of the level 2 handoff operation of a WLAN system will now be provided.

A WLAN system may include a station (STA), a plurality of access points (APs) and an authentication server (AS). The STA may be associated with one AP and communicates frames over air only through the associated AP. As the STA moves towards the outskirts of the cell area of a currently associated AP, it may move into an overlapping area (i.e., a handoff area); that is, an area that overlaps the cell area of another AP. When this occurs, the STA may disassociate with the currently associated AP and initiates a level 2 handoff procedure for authenticating and re-associating with the another AP.

The level 2 handoff procedure may comprise an active scanning procedure (or a probing procedure) for collecting candidate APs to be re-associated with, a re-association procedure for selecting one of the collected candidate APs and re-associating with the selected AP and a pre-authentication procedure with all of the collected candidate APs except the re-associated AP. Such handoff procedure must be completed in a very short time. Prolonged handoff time delay may cause disconnection of a call and/or degradation of call quality. Scan delay, authentication delay and IP lease delay are among the factors that contribute to the handoff time delay.

### 1. Scan delay and back-scanning

Scan delay is a time delay caused by the active scanning procedure. In implementing this procedure, each of the APs in a WLAN system may use one channel to perform radio communication with a STA in its cell area. A STA attempting to handoff to another AP successively scans the channels provided by the WLAN system and may select the AP operating on a channel with a largest Received Signal Strength (RSS) and/or Signal to Noise Ratio (SNR) as an AP to re-associate with.

However, the time taken to scan each channel is approximately 50 ms. For example, if the total number of channels provided by a WLAN system is 11, then the time taken to scan all the channels is in excess of 550 ms. This time significantly delays call quality, especially since the STA cannot communicate with other STAs during the channel scanning time.

Back-scanning is a method designed to reduce scan delay. According to this method, while communicating with another STA through the currently associated AP, the STA intermittently switches to other channels not used by the currently associated AP to scan other APs located near the STA. For example, the STA may repeatedly perform channel switching as follows: channel 1 (call) ->channel 2 (scan) -> channel 1 (call) - >channel 3 (scan) -> ... -> channel 1 (call) ->channel 11 (scan).

However, such a scanning method requires the scanning time for each channels to be relatively short to prevent degradation in call quality. Thus, when the STA is located in a hostile channel environment (e.g., a location where channel interference from neighboring AP and/or STA is severe), the scanning operation may not be effectively carried out by STA due to short scanning time.

### 2. Authentication delay and pre-authentication

Authentication delay is a time delay caused by the authentication procedure. A pre-authentication method may be used to reduce authentication delay. According to this method, the STA may re-associate with the most appropriate one of the candidate APs detected during an active scan procedure, and then authenticates in advance with all remaining APs detected during the active scan procedure. The authentication delay that might occur in the future roaming situation can be reduced by performing the authentication procedure in advance with other candidate APs.

### 3. IP lease delay

IP lease delay relates to the time required to obtain a new IP address (i.e., an identifier of the IP protocol (a 3^{rd} layer protocol)) of a STA using the dynamic host configuration protocol (DHCP) after completing the level 2 handoff procedure by the IEEE 802.11 protocol (a 2^{nd} layer protocol)). Each element of a WLAN system (e.g., a STA and an AP) may be assigned a unique level 2 identifier (an ID for a 2^{nd} layer protocol) and a unique 3^{rd} layer identifier (an ID for 3^{rd} layer protocol).

Generally, a basic service set identifier (BSSID) of the IEEE 802.11 protocol and an IP address of the IP are used as level 2 and 3 identifiers, respectively. An IP address includes a network number, which represents the network and/or sub-network to which the device using the corresponding IP address belongs, and a device number that is uniquely assigned to the device for the network and/or sub-network.

When the STA handoffs to another AP, if the network or sub-network number of the previously associated AP and that of the re-associated AP are different, then the STA performs a DHCP discover procedure to obtain a new IP address from the DHCP server of the WLAN system. On the contrary, if the network or sub-network number of the previously associated AP and that of the re-associated AP are identical, then the STA does not have to perform the DHCP discover procedure.

The STA obtains the BSSID of the re-associated AP upon completion of the handoff procedure of the IEEE 802.11 protocol. However, the IP address of the re-associated AP, which is level 3 information, cannot be derived from the BSSID of the re-associated AP, which is level 2 information. Accordingly, there is a problem in that the STA cannot determine whether the network or sub-network, to which the re-associated AP belongs, has changed (i.e., whether a level 3 movement has occurred).

Thus, the STA must perform the DHCP discover procedure, even when only a level 2 movement within the same network or sub-network (only a change in the BSSID of the associated or re-associated AP and no change in the network or sub-network number) has occurred. This leads to unnecessary traffic overheads whenever the STA performs handoff and waste of valuable radio resources.

One or more embodiments disclosed herein relate to a method and apparatus for performing a level 2 handoff procedure of a wireless local area network (WLAN) terminal in a WLAN system, which provides a plurality of channels to the WLAN terminal. The method and apparatus may allow the WLAN terminal to perform back-scanning only on the channels provided by AP(s) neighboring the AP currently associated with the WLAN terminal. Further, the method and apparatus may allow the WLAN terminal to determine whether a level 3 movement has occurred by performing the level 2 handoff procedure.

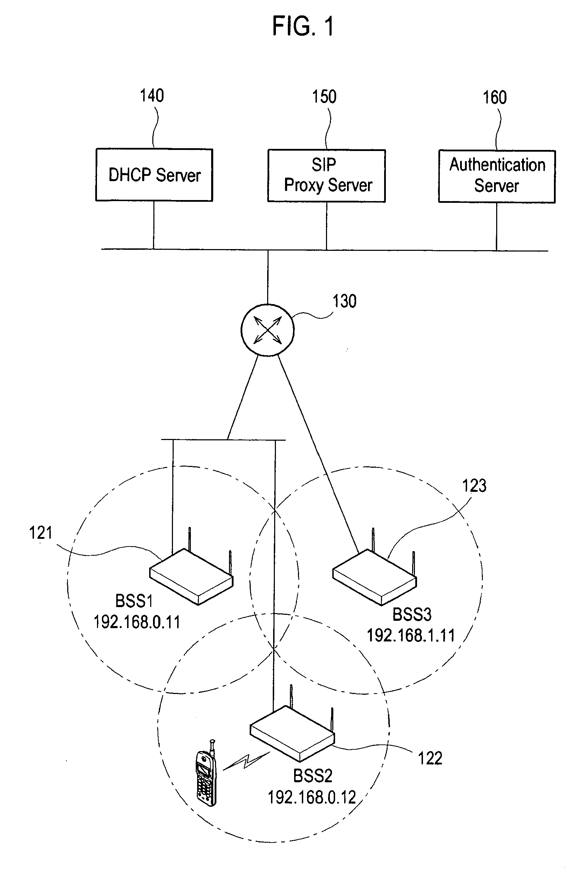

Figure 1 shows one embodiment of a WLAN system 100 which includes: a WLAN station (STA) 110; a plurality of access points (APs) 121-123 to associate or re-associate with the STA to provide wireless communication service thereto; and a router 130 to route data of the WLAN system 100 according to an internet protocol (IP) address (which is level 3 information) contained in the corresponding data. The WAN system further includes a dynamic host configuration protocol (DHCP) server 140 to assign and manage IP addresses for each of the STA and the APs 121-123; a session initiation protocol (SIP) server 150 which operates as an information server to store and manage a neighborhood AP table for the APs 121-123; and an authentication server (AS) 160 to authenticate the STA and the APs 121-123 in accordance with the 802.1X protocol.

According to one embodiment, the WLAN system may employ the Institute of Electrical and Electronics Engineers (IEEE) 802.11 protocol as a 2^{nd} layer protocol. A service set identifier (SSID) is a level 2 identifier uniquely assigned to each WLAN system (e.g., WLAN system 100). The SSID enables a plurality of WLAN systems to simultaneously operate in a same location.

Figure 1 illustrates only one WLAN system and in this system all STAs and APs may be assigned an identical SSID. A basic service set identifier is a level 2 identifier (a medium access control (MAC) identifier) uniquely assigned to each AP of the WLAN system. The BSSID is used for identifying each AP by all of the IEEE 802.11 protocol processing modules in devices 110, 121-123, 130, 140, 150 and 160 of the WLAN system.

Further, the WLAN system may employ IP as a 3^{rd} layer protocol and IP address information as a level 3 identifier. The IP address information may include an IP address and a net mask. The IP address may include a network number and a device number. The net mask is used to indicate which respective portions in the corresponding IP address represent the network number and the device number. The IP address may be dynamically assigned by the DHCP server 140 upon a request from STA 110 and each of APs 121-123. The IP address request/assignment procedure may be a DHCP discover procedure of the DHCP, which is a 3^{rd} layer protocol.

The level 2 and level identifiers may be used in management of and data exchange between the devices constituting the WLAN system 100. Each of the modules for a particular layer of the WLAN system 100 may be designed to be independent from the modules for the other layers. Thus, for example, the level 3 identifier, which is level 3 information, may not be inferred just from the level 2 identifier, which is level 2 information.

Operation of each of the constituents of WLAN system 100 will now be explained in greater detail. Each of the APs 121-123 may perform wireless communication using one of a plurality of channels provided by the WLAN system. According to one embodiment, each AP may perform wireless communications using a channel different from a channel used by neighboring ones of the APs. Among the plurality of channels provided by the WLAN system, each of the APs may scan all the channels provided by the WLAN system to detect channels used by neighboring APs. A passive scanning method, for example, may be used in scanning the channels.

In a passive scanning method, each AP may periodically broadcast a beacon frame on a channel currently being used. The beacon frame is a frame that is periodically transmitted by each AP to provide information of its presence and to relay various parameters such as a timestamp, a SSID, etc. In one embodiment, the beacon frame may include the BSSID of the AP which transmitted the beacon frame. Each AP may scan all the channels provided by the WLAN system and receive the beacon frames transmitted by neighboring APs. Accordingly, each AP may identify the presence of the neighboring APs and the channels used by the neighboring APs.

In one embodiment, each AP may measure the received signal strength (RSS) of the beacon frame transmitted by its neighboring APs. The greater the measured RSS, the greater the possibility that the AP that transmitted the beacon frame is located in a more proximate location. In one embodiment, the detection operation may be performed during the network idle time of the corresponding AP (e.g., the time period the corresponding AP 121, 122, or 123 does not perform communication with STA 110).

Upon completion of the passive scanning procedure, each AP may generate neighborhood AP information, which, for example, may contain channel information (e.g., a channel identifier) indicating the channel(s) used by neighboring APs. In one embodiment, the neighborhood AP information may include the RSS of the received beacon frame, the BSSID of the AP that transmitted the beacon frame, and the BSSID of the AP that generated the neighborhood information. For example, the neighborhood AP information generated by the 2^{nd} AP 122 may be as follows:

**Table 1**

| | |
|---|---|
| BSSID | Neighborhood AP |
| BSS2 | [CH11:(BSS3.-50dBm)][CH1:(BSS1.-40dBm)] |

According to Table 1, the BSSID of the 2^{nd} AP 122 is "BSS2." Also, the 2^{nd} AP 122 has two neighboring APs, which respectively use CH1 (with -40 dBm as the RSS and "BSS1" as the BSSID) and CH11 (with -60 dBm as the RSS and "BSS3" as the BSSID) to perform wireless communication. Here, "BSS1" and "BSS3" may correspond to the BSSID of the 1^{st} and 3^{rd} APs respectively.

Upon generating the neighborhood AP information, each AP may transmit the neighborhood information to the SIP proxy server 150. In one embodiment, each AP may transmit the neighborhood information to the SIP proxy server using the SIP. For example, each AP may generate an SIP message containing neighborhood AP information as an extension header. The SIP message may then be transmitted to the SIP proxy server 150. The SIP message may, for example, be a SIP NOTIFY message defined in accordance with the SIP, however a different message may be used in other embodiments.

An information server, SIP proxy server 150 for example, may receive the neighborhood AP information transmitted by each AP and generate a neighborhood AP table for the APs of the WLAN system based on the received neighborhood AP table. At this time, by adding the network information of the AP that transmitted the received SIP message, a table including the LD information of the AP is generated. For example, the neighborhood AP table may be as follows:

**Table 2**

| BSSID | IP Address | Netmask | Neighborhood AP |
|---|---|---|---|
| BSS1 | 192.168.0.11 | 255.255.255.0 | [CH6:(BSS2,-60dBm)][CH11:(BSS3,-30dB |
| BSS2 | 192.168.0.11 | 255.255.255.0 | [CH11:(BSS3,-50dBm)][CH1:(BSS1,-40dB |
| BSS3 | 192.168.1.11 | 255.255.255.0 | [CH1:(BSS1,-60dBm)][CH6:(BSS2,-20dBr |

According to Table 2, the BSSID of the 1^{st} to 3^{rd} APs are "BSS1," "BSS2" and "BSS3," respectively. It can be seen from Table 2 that the neighborhood information transmitted by the 2^{nd} AP 122 is located second from the top among 3 neighborhood information items.

Upon generating the neighborhood AP table, the SIP Proxy Server 150 may transmit the generated neighborhood table to all STAs of the WLAN system (e.g., STA 110). In one embodiment, the SIP proxy server may transmit the neighborhood table to STA 110 using the SIP. For example, the SIP proxy server may generate an SIP message containing the neighborhood AP information as an extension header. The AIP message may then be transmitted to the SIP proxy server. The SIP message may, for example, be a SIP NOTIFY message of the SIP. In another embodiment, the SIP message may be a 200 OK response message of the SIP.

The STA 110 may perform an association procedure to connect to one of the APs 121-123 (e.g., then 2^{nd} AP 122) so that wireless communication may be performed through the 2^{nd} AP 122. In one embodiment, the STA may perform an SIP registration procedure with SIP proxy server 150 and receives a 200 OK response containing the neighborhood AP table. In another embodiment, the STA may receive the neighborhood AP table through a SIP NOTIFY message. The neighborhood AP table may be updated by the SIP proxy server.

As the STA migrates, and the signal to noise ratio (SNR) of the wireless signal received from the 2^{nd} AP 122 associated with the STA falls below a predetermined threshold, the STA may initiate a level 2 handoff procedure (i.e., a handoff performed in accordance with the IEEE 802.11, which is a 2^{nd} layer protocol). The handoff procedure may include performing an active scanning procedure (e.g., a back-scanning procedure), an authentication procedure (e.g., a pre-authentication procedure), and a re-association procedure.

In performing the back-scanning and pre-authentication procedures, the STA, based on the received neighborhood AP table, selects and performs the back-scanning and the pre-authentication procedures only on the channels currently being used by the APs neighboring the 2^{nd} AP 122.

In performing the back-scanning procedure, the STA may retrieve the BSSID of the AP currently associated therewith (i.e., the 2^{nd} AP 122) from the neighborhood AP table received from the SIP proxy server 150. In Table 2, the AP neighborhood information item with the BSSID "BSS2" represents the neighborhood AP information for the 2^{nd} AP 122. Thus, STA 110 may extract from the retrieved neighborhood AP information channel information on channels used by APs neighboring the 2^{nd} AP 122.

In Table 2, there are 2 APs neighboring the 2^{nd} AP 122 and the neighboring APs (i.e., the 1^{st} AP 121(BSS1) and the 3^{rd} AP 123(BSS2)) uses channels 1 and 11, respectively. The STA may sequentially broadcast a probe request on channels 1 and 11, and the STA may initiate a timer for each of the probe requests as the respective probe requests are broadcast. The STA may receive a probe response for each of the probe requests on the channels, on which the corresponding probe request was broadcast, before the expiration of the corresponding timer. If the probe response is not received before the timer expiration, then the STA terminates the scanning operation for the corresponding channel.

In one embodiment, if STA 110 is associated with the 2^{nd} AP 122 by channel 2, then the STA may continuously repeat the following operation: channel 2 (make a call through 2^{nd} AP 122) -> channel 1 (scan) -> channel 2 (call) -> channel 11 (scan). Accordingly, STA 110 may perform scanning operations while making a call to another STA (not shown) through the 2^{nd} AP 122.

If the magnitude of the signal received from the currently associated AP becomes smaller than a predetermined threshold value, the STA may attempt to re-associate with an AP among the APs known through the active scan procedure that is of the largest signal magnitude. That is, the STA may transmit a re-association request to the selected AP, receive a re-association response in response to the transmitted re-association request, and perform an authentication procedure with the selected AP.

When re-association with the selected AP is completed, the STA may perform a pre-authentication procedure with all of the APs detected during the back-scanning operation, except the re-associated AP. The STA may connect to the authentication server 160 through the AP to perform the pre-authentication procedure in accordance with the 802.1X protocol. Accordingly, when the STA roams to another AP in the future, the STA is already pre-authenticated to the next selected AP and thus does not have to perform a separate authentication procedure with the next selected AP, thereby effectively removing authentication delay due to the authentication procedure. Accordingly, the STA is re-associated with the selected AP and the level 2 handoff procedure is completed.

Because the STA does not scan all of the channels provided by the WLAN system, but only those used by neighboring relative APs to the currently associated AP based on the AP neighborhood table, the scanning procedure can be finished in a relatively short time, thereby substantially reducing the level 2 handoff time.

Also, because a relatively smaller number of channels is scanned, the STA may allocate longer scanning time for each channel. As the scanning time for each channel increases, the time for waiting and receiving the probe response to the probe request increases. This enables the STA to effectively scan each channel even when the STA is located in an area with severe inter-channel interference.

Further, as the number of channels scanned decreases, the total number APs detected by the STA decreases. Thus, the number of APs with which the STA performs the pre-authentication decreases. Consequently, the time delay due to performing unnecessary pre-authentication with other APs may be eliminated.

Upon completing the level 2 handoff procedure and re-associating with a new AP, the STA retrieves IP address information corresponding to the BSSID of the re-associated AP from the neighborhood AP table and determines whether a level 3 movement has occurred (i.e., whether the network number of the previously associated 2^{nd} AP 122 and that of the newly re-associated AP are identical) based on the retrieved IP address information.

In particular, while performing the re-association procedure, the STA may receive the BSSID of the re-associated AP. The STA then retrieves from the neighborhood AP table the IP address information of the re-associated AP based on the received BSSID, and the STA determines whether a level 3 movement has occurred (i.e., whether there has been any change in the network number of the currently associated AP) based on the IP address information of the re-associated AP. In other words, the STA determines whether the network number contained in the existing IP address assigned thereto and the network number contained in the IP address of the re-associated AP are different.

If a level 3 movement is determined to have occurred, the STA performs a DHCP discover procedure so that the DHCP server 140 may assign new IP address information and transmit the new IP address information to the STA through the re-associated AP. The STA then sets the new IP address information as its IP address information.

For example, according to the neighborhood AP of Table 2, the network number of the 1^{st} and 3^{rd} APs 121 and 123 is 192.168.0.0, and that of the 2^{nd} AP 122 is 192.168.1.0. Thus, when the STA hands off from the 1^{st} AP 121 to the 3^{rd} AP 123 or vice-versa, the STA does not have to initiate the DHCP discover procedure. However, when the STA hands off between 1^{st} or 3^{rd} AP 121 or 123 and 2^{nd} AP 122, the STA may need to perform the DHCP discover procedure, since the network number portion of the IP address of the STA changes from 192.168.0 to 192.168.1 or vice-versa.

When a level 3 movement occurs, the STA may obtain new IP address information in order to perform a SIP handoff procedure supported by the SIP, which is a 5^{th} layer protocol. In one embodiment, the SIP handoff procedure may, for example, follow the SIP handoff procedure disclosed in Elin Wedlund et al., "Mobility Support Using SIP", Second ACM/IEEE International Conference on Wireless and Mobile Multimedia Aug 1999, pp. 76-82.

Upon completion of the level handoff procedure in accordance with IEE 802.11 protocol, the STA may obtain the BSSID of the re-associated AP. However, conventionally, the IP address, which is level 3 information, cannot be directly obtained or inferred from the BSSID, which is level 2 information. Thus, a STA may not be able to determine whether there has been any change in the network or sub-network to which the associated/re-associated AP belongs (i.e., whether a level 3 movement has occurred). Accordingly, the STA may perform the DHCP discover procedure, even when only a level 2 movement (a change in the BSSID of the associated/re-associated AP) has occurred within the same network/sub-network. This produces unnecessary overhead whenever the STA 110 performs a handoff and leads to waste of valuable communication resources.

According to the embodiment shown in Figure 1, upon completion of the level 2 handoff, occurrence of a level 3 movement may be determined by using the neighborhood AP information. Thus, the DHCP discover procedure is only performed when a level 3 movement has actually occurred.

Table 3 below shows a computer simulation result showing an example of a delay time difference between the instances where the neighborhood AP information (NAPI) were used and not used for the WLAN system illustrated in Figure 1 when the STA hands off.

**Table 3**

| | | NAPI used | NAPI not |
|---|---|---|---|
| Roam to BSS1 | Scan delay | 30ms | 30ms |
| | 802.1X authentication delay | 0ms | 0ms |
| | 4-wav handshake delay | 50ms | 50ms |
| | IP address lease delay | 0ms | 500ms |
| Roam to BSS2 | Scan delay | 30ms | 1000m |
| | 802.1X authentication delay | 0ms | 0ms |
| | 4-wav handshake delay | 50ms | 50ms |
| | IP address lease delay | 500ms | 500ms |
| Roam to BSS3 | Scan delay | 30ms | 1200m |
| | 802.1X authentication delay | 0ms | 1200m |
| | 4-wav handshake delay | 50ms | 50ms |
| | IP address lease delay | 500ms | 500ms |

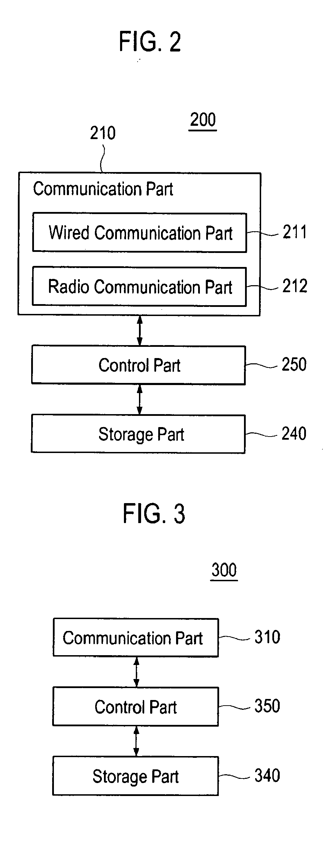

Figure 2 shows one embodiment of an AP that may be used in the WLAN system of Figure 1. This AP 200 includes a communication part 210 to perform wired and wireless communications, a storage part 240 to store a control program, a system program, etc., and a control part 250 to control the overall operation of the AP.

The communication part 210 may be controlled by the control part and may include: a wired communication part 211 connected to a router, other AP(s), a DHCP server, a SIP proxy server and/or an authentication server of a WLAN system through wire; and a radio communication part 212 to wirelessly connect with a STA(s) and other AP(s). The wired communication part may transmit neighborhood AP information to an information server (e.g., the SIP proxy server). The radio communication part 212 may transmit to and receive from not only the STA but also other AP(s) a frame through one of the channels provided by the WLAN system (i.e. 1^{st} channel) and may receive beacon frames transmitted by the APs neighboring to AP 200 through channels different from the 1^{st} channel. The beacon frame may include the BSSID of the AP that transmitted the beacon frame.

The control part 250 may scan channels provided by the WLAN system through the wireless communication part 212 to detect the channels used by neighboring APs. The control part generates neighborhood AP information including the channel information that identifies each of the detected channels and transmits the neighborhood AP information to an information server.

In one embodiment, the control part may detect the channels used by neighboring APs during the network idle time of the AP 200. In one embodiment, the control part may receive a beacon frame transmitted by a neighboring AP through the channel used by the neighboring AP and measure the RSS of the received beacon frame to perform the detection operation. The neighborhood AP information may include at least one of the level 2 identifier of the neighboring AP, the measured RSS, the BSSID, or IP address information of the AP 200. The control part may transmit the neighborhood AP information to the information server by using the SIP.

Figure 3 shows one embodiment of an information server that may be used in the WLAN system of Figure 1. The information server 300 includes: a communication part 310 to perform wire-line and/or wireless communication; a storage part 320 to store control and system programs; and a control part 330 to control the overall operation of the information server 300.

The communication part 310 is controlled by the control part 350, receives from each of the plurality of APs 121-123 neighborhood AP information by landline, and transmits an AP neighborhood table based on the received neighborhood AP information to the STA 110 through an AP 121, 122 or 123 associated with the STA 110.

Based on the received neighborhood AP information, the control part 350 may generate the neighborhood AP table, which includes neighborhood AP information for each of the plurality of APs 121, 122 and 123, and transmit the neighborhood AP table to the STA 110.

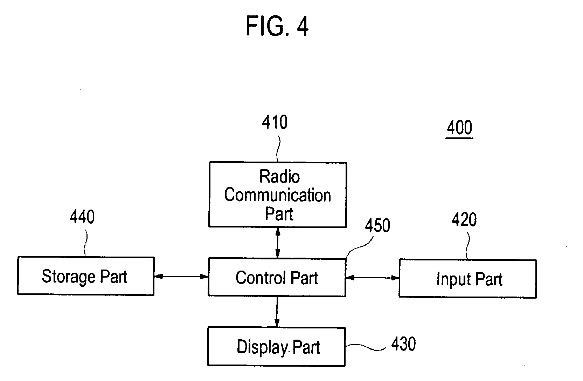

Figure 4 shows one embodiment of the STA. The STA 400 includes: a radio communication part 410 to perform radio communication; an input part 430 to include a plurality of character keys, number keys and function keys and generate a key input signal corresponding to the key input from a user, a display part 430 to include a liquid crystal display (LCD), for example; a storage part 440 to store a control program and a system program; and a control part 450 to control the overall operation of the STA.

The radio communication part 410 is controlled by control part 450. The radio communication part transforms the signals output from the control part into a radio signal and transmits the radio signal through an antenna (not shown). The radio communication part receives a radio signal from the antenna and transforms the received radio signal into a desired signal to output it to the control part. The radio communication part connects to any one of the plurality of APs 121-123 of the WLAN system to perform wireless/radio communication. In one embodiment, the radio communication part may receive a neighborhood AP table from an information server (e.g., the SIP proxy server 150) through the associated AP.

Further, the control part 450 may store the received neighborhood AP table at the storage part 440 and perform a level 2 handoff procedure (e.g., a back-scanning procedure, a pre-authentication procedure and/or a re-association procedure) based on the received neighborhood AP table.

In particular, the control part obtains from the neighborhood AP table the channel information on each neighboring AP of the AP currently associated with the STA, and scans each of the channels used by the neighboring APs based on the obtained channel information. In one embodiment, when the number of channels used by the neighboring APs is equal to or greater than 2, the control part may sequentially scan each of the channels based on the RSS of the channels.

After scanning, the control part may select one of the neighboring APs as the AP with which to re-associate (i.e., the AP to handoff to) and re-associates with the selected AP. Meanwhile, the control part may use the obtained channel information to perform a pre-authentication procedure with all of the neighboring APs except the selected AP. Accordingly, the level 2 handoff procedure is completed.

After completing the level 2 handoff procedure, the control part 450 determines based on the received neighborhood AP table whether a level 3 movement of the STA 400 has occurred by performing the level 2 handoff procedure. If it is determined that level 3 movement has occurred, then the control part may perform a DHCP discovery procedure to obtain newly assigned IP address information for the STA from the DHCP server 140 and performs the SIP handoff procedure.

An example syntax of the neighborhood AP information included in a SIP message as a SIP extension header is shown below.

AP_Neighborhood_Info = [BSS_vakye]*(;BSS_value)

BSS_value = BSSID ; L3_Info ; RF_Neighborhood_Info

RF_Neighborhood_Info = [Channel_dBm]*(; Channel_dBm)

Channel_dBm = CH_Num ; [AP_dBm]*(; AP_dBm)

AP_dBm = BSSID ; DBm

CH_Num = 1 | 2 | 3 | 4 | 5 | 6 | 7 | 8 | 9 | 10 | 11 | 12 | 13

DBm = Signal strength in dBm

IPAddress = IPv4 Address IPv6 Address

IPNetMask = IPv4 NetMask | IPv6 NetMask

BSSID = AP MAC Address

-----

Legend

□: zero or one occurence operation

*(): zero or more occurence operation

; : concatenation operation

| : OR operation

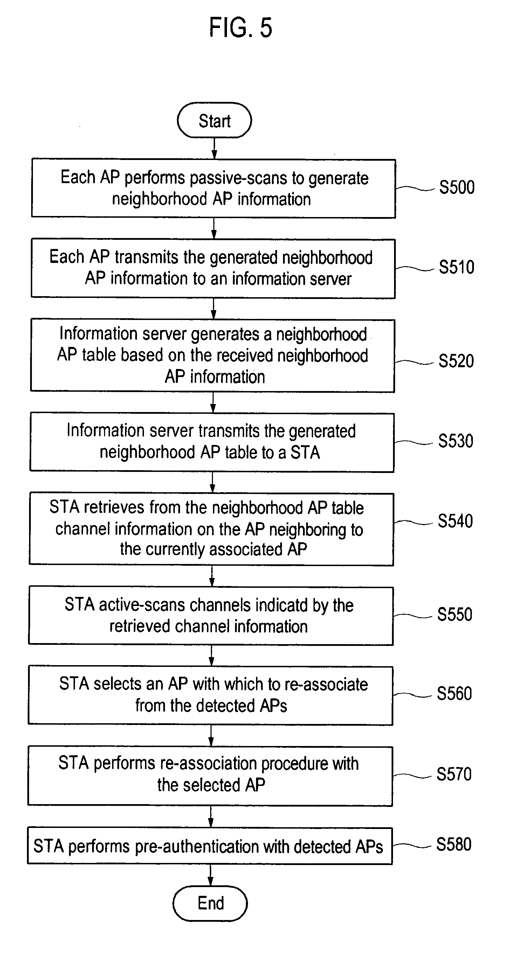

Figure 5 is a flow chart showing steps included in one embodiment of a level 2 handoff procedure for a STA. In this procedure, each of the APs 121-123 of the WLAN system 100 performs passive scanning on each of the channels provided by the WLAN system to generate neighborhood AP information (S500). In S510, each APs transmits the neighborhood AP information to an information server (e.g., the SIP proxy server 150). In S520, the information server generates a neighborhood AP table based on the received neighborhood AP information and transmits the neighborhood AP table to the STA 110 (S530).

In S540, when the SNR of the signal received from the currently associated AP becomes lower than a predetermined threshold, the STA retrieves from the neighborhood AP table channel information on the APs neighboring the currently associated AP, and performs an active scanning procedure (e.g., a back-scanning procedure) on the channels indicated by the retrieved channel information (S550). Upon completing the back-scanning procedure, the STA selects among the APs detected by the back-scanning procedure the one with the highest RSS or SNR as the AP with which to re-associate (S560). In S570, the STA performs a re-association procedure with the selected AP, performs a pre-authentication procedure with all of the APs except the AP being re-associated with (S580), and aborts the procedure.

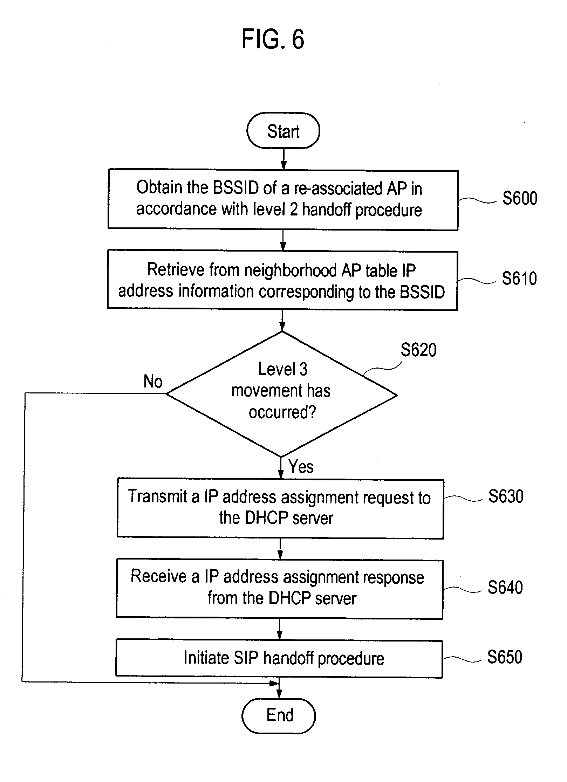

Figure 6 is a flow chart showing steps included in one embodiment of a method for detecting a level 3 movement by the STA. First, the STA 110 stores a neighborhood AP table received from an information server (e.g., the SIP proxy server 150). The neighborhood AP table may be periodically updated. Referring to Figure 6, the STA obtains the BSSID of an AP re-associated in accordance with a level 2 handoff procedure (S600). In S610, the STA retrieves from the neighborhood AP table IP address information that corresponds to the BSSID of the re-associated AP.

In S620, the STA determines whether the network number or the retrieved IP address information is different from the network number of existing IP address information set in the STA 110 (i.e., determines whether a level 3 movement has occurred). If level 3 movement has occurred, then the STA transmits a IP address assignment request to the DHCP server 150 (S630) and receives an IP address assignment response from the DHCP server 150 (S640). Thereafter, the STA initiates a SIP handoff procedure (S650) and aborts the process. Meanwhile, if a level 3 movement has occurred, then the process is aborted.

In explaining the foregoing embodiments, a configuration in which a neighborhood AP table was provided and/or updated from a SIP proxy server to a STA through SIP was disclosed. However, in other embodiments, the neighborhood AP table may be provided and/or updated from an authentication server (e.g., an authentication, authorization and accounting (AAA) server) to a STA using Extensible Authentication Protocol (EAP). As disclosed in "Pre-Authenticated Signaling in Wireless LANs using 802.1 x Access Control," Arthur Hecker et al., IEEE Globecom, EAP can be used not only for authentication purposes but also for transporting general signaling data. An EAP method may be added between a STA and an authentication server to provide necessary information to an application program without any modification to an AP. Thus, the authentication server may expand the existing EAP method or define a new EAP method to provide a neighborhood AP table to a STA.

In particular, one embodiment may be implemented in a manner in which the authentication server receives the neighborhood AP information from the APs to generate the neighborhood AP table. Upon completing the 802.1x authentication process of the STA, the STA receives and updates the neighborhood AP table from the authentication server using EAP. The STA, upon reception of the neighborhood AP table from the authentication server, performs the level 2 handoff procedure based on the neighborhood AP table and determines whether a level 3 movement has occurred as a result of the level 2 handoff procedure.

According to the embodiments described herein, in performing a level 2 handoff procedure of a WLAN system, a STA of the WLAN system can perform back-scanning only on the channels used by the APs neighboring to the AP currently associated with the STA instead of all the channels provided by the WLAN system. It can then determine whether a level 3 movement has occurred upon completing the level 2 handoff procedure, thus enabling an efficient management of the radio resources of the WLAN system.

According to one aspect, a wireless local area network (WLAN) system providing a plurality of channels is provided. The system may comprise: a plurality of APs, each of said APs using one channel among the plurality of channels; an information server; and at least one WLAN terminal associated with one of the plurality of APs. Each of the APs may scan the plurality of channels to obtain channel information on at least one AP neighboring each of said APs. The information server may receive the channel information from each of the APs to generate a neighborhood AP table.

Each of the WLAN terminals may receive the neighborhood AP table, retrieve channel information on at least one AP neighboring APs associated with each of the WLAN terminals, and scan the channels indicated by the retrieved channel information. In one embodiment, each of said WLAN terminals may perform pre-authentication with at least one AP, said at least one AP neighboring APs associated with each of the WLAN terminals.

Any reference in this specification to "one embodiment," "an embodiment," "example embodiment," etc., means that a particular feature, structure or characteristic described in connection with the embodiment is included in at least one embodiment of the invention. The appearances of such phrases in various places in the specification are not necessarily all referring to the same embodiment. Further, when a particular feature, structure or characteristic is described in connection with any embodiment, it is submitted that it is within the purview of one skilled in the art to effect such feature, structure or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, numerous variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method of managing communications in a wireless Local Area Network (WLAN) system, comprising:
scanning a plurality of channels to detect at least one channel used by a first access point (AP);
generating neighborhood AP information including channel information for identifying at least one of the detected channels; and
transmitting the neighborhood AP information to an information server, wherein said scanning is performed by a second AP and wherein the first AP is a neighboring AP of the second AP.

2. The method of claim 1, wherein said scanning comprises:
receiving a beacon frame transmitted by one or more neighboring APs including the first AP through the channel used by at least the first AP; and
measuring a received signal strength of the beacon frame transmitted by the first AP wherein said generating comprises:
generating the neighbor AP information to include the measured received signal strength.

3. The method of claim 2, wherein said receiving comprises:
receiving the beacon frame including a level 2 identifier of the first AP; wherein said generating comprises:
generating the neighborhood AP information to include the level 2 identifier of the received beacon frame.

4. The method of claim 1, wherein said generating comprises:
generating the neighborhood AP information to include a level 2 identifier and a level 3 identifier of the corresponding AP.

5. A method of managing communications in a wireless local area network (WLAN) system, comprising:
receiving neighborhood AP information transmitted from each of the plurality of access points (APs);
generating a neighborhood AP table for the plurality of APs based on the received neighborhood AP information; and
transmitting the neighborhood AP table to said at least one WLAN terminal, wherein said neighborhood AP information includes channel information on at least one AP neighboring an AP that transmitted the neighborhood AP information.

6. The method of claim 5, wherein said neighborhood AP information further includes:
at least one of a received signal strength of a channel used by said at least one neighboring AP, a level 2 identifier of the at least one neighboring AP, or a level 2 identifier and a level 3 identifier of the AP that transmitted the neighborhood AP information.

7. A method of scanning channels of a wireless local area network (WLAN) system by a wireless local area network (WLAN) terminal, said method comprising:
obtaining neighborhood access point (AP) information on a first AP from the information server, said neighborhood AP information including channel information on at least a second AP neighboring the first AP; and
scanning at least one channel used by said at least the second AP based on the channel information included in the obtained neighborhood AP information.

8. The method of claim 7, wherein said obtaining comprises:
receiving neighborhood AP table including neighborhood AP information on each of a plurality of APs including the second AP; and
retrieving from the received neighborhood AP table neighborhood AP information on the first AP.

9. The method of claim 8, wherein said neighborhood AP information further includes at least one of a received signal strength of a channel used by said at least the second AP, a level 2 identifier of the at least the second AP and a level 2 identifier and a level 3 identifier of the first AP.

10. The method of claim 9, further comprising:
associating or re-associating with one of the at least the second AP to receive a level 2 identifier of the associated or re-associated second AP;
retrieving from the received neighbor AP table a level 3 identifier corresponding to the level 2 identifier of the associated or re-associated second AP;
determining whether a level 3 movement has occurred based on the retrieved level 3 information; and
if a level 3 movement is determined to have occurred, then transmitting to a level 3 identifier assigning server a new level 3 identifier assignment request for the WLAN terminal.

11. The method of claim 9, wherein the scanning comprises:
if the number of the at least the second AP is equal to or greater than 2, then scanning the channels used by each of the plurality of APs sequentially in accordance with the received signal strength of the channels used by each of the plurality of APs.

12. The method of claim 7, further comprising:
performing a pre-authentication procedure with the at least the second AP using the obtained channel identifier.

13. An access point (AP) of a wireless local area network (WLAN) system, said AP comprising:
a radio communication part configured to communicate with at least one neighborhood AP; and
a control part configured to scan a plurality of predetermined channels through the radio communication part to detect at least one channel used by the at least one neighborhood AP, generate neighborhood AP information including channel information identifying each of the detected channels, and transmitting the generated neighborhood AP information to an information server.

14. An information server of a wireless local area network (WLAN) system, said information server comprising:
a communication part configured to receive neighborhood AP information from a plurality of APs; and
a control part configured to generate neighborhood AP table for the plurality of APs based on the received neighborhood AP information, wherein said neighborhood AP information includes channel information on at least one neighborhood AP that transmitted the neighborhood AP information.

15. A wireless local area network (WLAN) terminal of a WLAN system, said WLAN system comprising a plurality of access points (APs), said WLAN terminal associated with a first AP among the plurality of APs and comprising:
a radio communication part configured to communicate with an information server; and
a control part configured to obtain neighborhood AP information through the radio communication part from the information server, said neighborhood AP information including channel information on at least a second AP neighboring the associated first AP, and scanning at least one channel used by the at least the second AP based on the channel information included in the obtained neighborhood AP information.
